# FASCICULE DE BREVET EUROPEEN

(11) **EP 3 696 081 B1**
(45) Date de publication et mention de la délivrance du brevet: **10.11.2021**
(21) Numéro de dépôt: 20152023.6
(22) Date de dépôt: 15.01.2020
(51) Int. Cl.: B64C 1/12, B64F 5/10, E21B 7/00

(54) **PROCÉDÉ D'ASSEMBLAGE DE DEUX PIÈCES ET PROCÉDÉ D'ASSEMBLAGE DE DEUX TRONÇONS D'UN AÉRONEF**
VERFAHREN ZUM ZUSAMMENBAU VON ZWEI TEILEN, UND VERFAHREN ZUM ZUSAMMENBAU VON ZWEI ABSCHNITTEN EINES LUFTFAHRZEUGS
METHOD FOR ASSEMBLING TWO PARTS AND METHOD FOR ASSEMBLING TWO SECTIONS OF AN AIRCRAFT

(30) Priorité: 15.02.2019 FR 1901538
(43) Date de publication de la demande: 19.08.2020
(73) Titulaire: Airbus Operations, 31060 Toulouse (FR)
(72) Inventeur: FARRE, Eric, 31770 Colomiers (FR)
(74) Mandataire: Fantin, Laurent

(56) Documents cités:
- DE-U1-202006 008 068
- FR-A1- 2 910 874
- US-A1- 2003 221 306
- US-A1- 2010 308 171
- US-A1- 2014 208 592

## Description

La présente demande se rapporte à un procédé d'assemblage de deux pièces ainsi qu'à un procédé d'assemblage de deux tronçons d'un aéronef.

Selon un mode de réalisation, un aéronef comprend plusieurs tronçons réalisés indépendamment les uns des autres, positionnés bout à bout et assemblés les uns aux autres grâce à une pluralité d'éléments de liaison finaux, comme des rivets ou des boulons par exemple, logés dans des trous finaux présentant un diamètre donné.

Selon un mode opératoire connu, les deux tronçons à assembler sont préassemblés puis percés pour réaliser des avant-trous présentant un diamètre inférieur à celui des trous finaux. En suivant, les deux tronçons sont désassemblés puis nettoyés. Les surfaces de contact de chacun des tronçons sont enduites d'un mastic d'étanchéité à l'air et à l'eau, puis les deux tronçons sont de nouveau assemblés. Des éléments de liaison temporaires sont mis en place dans les avant-trous pour maintenir les deux tronçons lors de la réalisation des trous finaux et de la pose des éléments de liaison finaux entre les éléments de liaison temporaires. Enfin, les éléments de liaison temporaires sont retirés, les avant-trous repercés au diamètre des trous finaux et des éléments de liaison finaux sont mis en place dans les trous finaux pour remplacer les éléments de liaison temporaires.

Un procédé d'assemblage de deux pièces utilisant des éléments de liaison temporaires est notamment décrit dans le document US2010308171.

Ce mode opératoire n'est pas pleinement satisfaisant car les opérations de pré-assemblage, de désassemblage puis de remontage tendent à augmenter la durée du procédé d'assemblage.

La présente invention vise à remédier à tout ou partie des inconvénients de l'art antérieur.

A cet effet, l'invention a pour objet un procédé d'assemblage de première et deuxième pièces reliées dans un état assemblé par une pluralité d'éléments de liaison finaux, les première et deuxième pièces présentant des première et deuxième faces de contact en regard l'une de l'autre dans l'état assemblé ainsi que des trous finaux dans lesquels sont logés les éléments de liaison finaux.

Selon l'invention, le procédé d'assemblage comprend les étapes :
- de réalisation de premiers avant-trous dans la première pièce,
- de dépose d'un mastic d'étanchéité sur au moins l'une des première et deuxième faces de contact,
- d'accostage des première et deuxième pièces,
- de réalisation de deuxièmes avant-trous dans la deuxième pièce en utilisant un outil de perçage relié à un système d'aspiration et équipé d'un canon de perçage comportant une première partie qui présente un diamètre extérieur inférieur ou égal à celui des premiers avant-trous et une première extrémité en appui contre la deuxième face de contact de la deuxième pièce lors de la réalisation des deuxièmes avant-trous,
- de mise en place d'éléments de liaison temporaires positionnés dans les premiers et deuxièmes avant-trous,
- de réalisation de trous finaux entre les éléments de liaison temporaires et de mise en place des éléments de liaison définitifs dans lesdits trous finaux,
- de retrait des éléments de liaison temporaires, de perçage des trous finaux à la place des premiers et deuxièmes avant-trous et de mise en place des éléments de liaison définitifs dans lesdits trous finaux.

La présence de mastic d'étanchéité entre les première et deuxième faces de contact et l'usage d'un canon de perçage prenant appui contre la deuxième face de contact de la deuxième pièce permettent d'obtenir une étanchéité entre le canon de perçage et la deuxième pièce lors du perçage des deuxièmes avant-trous et l'aspiration par le système d'aspiration de tous les déchets produits lors du perçage. Ainsi, il n'est plus nécessaire de désassembler les première et deuxième pièces pour nettoyer les première et deuxième faces de contact puis de les réassembler pour la mise en place des éléments de liaison finaux. Selon une autre caractéristique, le diamètre extérieur de la première partie du canon de perçage est égal à celui des premiers avant-trous pour que la première partie du canon de perçage soit emmanchée dans l'un des premiers avant-trous.

Selon une autre caractéristique, la première partie du canon de perçage a une épaisseur de l'ordre de 0,6 mm.

Selon une autre caractéristique, chaque élément de liaison temporaire est une vis autoforeuse comportant un corps cylindrique fileté ainsi qu'une tête, ledit corps cylindrique fileté présentant un diamètre inférieur à celui des premiers avant-trous et étant configuré pour obtenir un vissage de la vis autoforeuse dans l'un des deuxièmes avant-trous. L'invention a également pour objet un procédé d'assemblage de deux tronçons d'un aéronef mettant en œuvre le procédé d'assemblage selon l'une des caractéristiques précédentes. D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale de deux tronçons d'aéronef avant d'être assemblés qui illustre un mode de réalisation de l'invention,
- La figure 3 est une coupe de deux pièces à assembler montrant une étape de réalisation d'avant-trous dans une des deux pièces à assembler qui illustre un mode de réalisation de l'invention,
- La figure 4 est une coupe longitudinale des deux pièces visibles sur la figure 3 après une étape d'enduction,
- La figure 5 est une coupe longitudinale d'un outil de perçage qui illustre un mode de réalisation de l'invention avant une étape de perçage,
- La figure 6 est une coupe longitudinale de l'outil de perçage visible sur la figure 5 après l'étape de perçage,
- La figure 7 est une coupe des deux pièces à assembler et d'un élément de liaison temporaire qui illustre un mode de réalisation de l'invention, au début du vissage,
- La figure 8 est une coupe des deux pièces à assembler et de l'élément de liaison temporaire visibles sur la figure 7, en fin de vissage,
- La figure 9 est une coupe de deux pièces à assembler reliées par un élément de liaison temporaire qui illustre une étape de réalisation d'un trou final,
- La figure 10 est une coupe des deux pièces visibles sur la figure 9 qui illustre une étape de mise en place d'un élément de liaison définitif,
- La figure 11 est une coupe des deux pièces visibles sur la figure 9 qui illustre une étape de réalisation d'un trou final à la place de l'élément de liaison temporaire, et
- La figure 12 est une coupe des deux pièces visibles sur la figure 9 qui illustre une étape de mise en place d'un élément de liaison définitif à la place de l'élément de liaison temporaire.

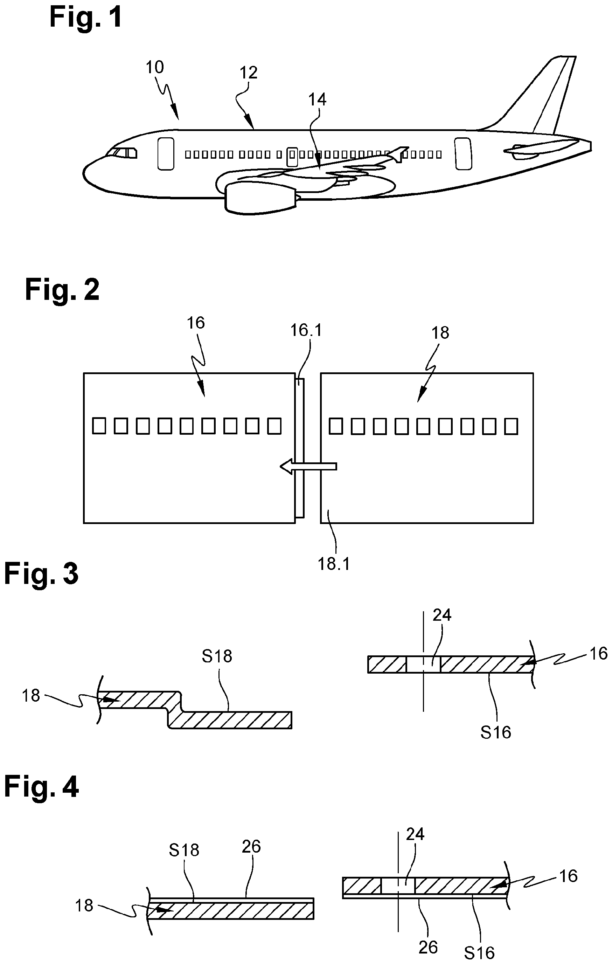

Sur la figure 1, on a représenté un aéronef 10 qui comprend un fuselage 12 ainsi que des ailes 14 positionnées de part et d'autre du fuselage 12.

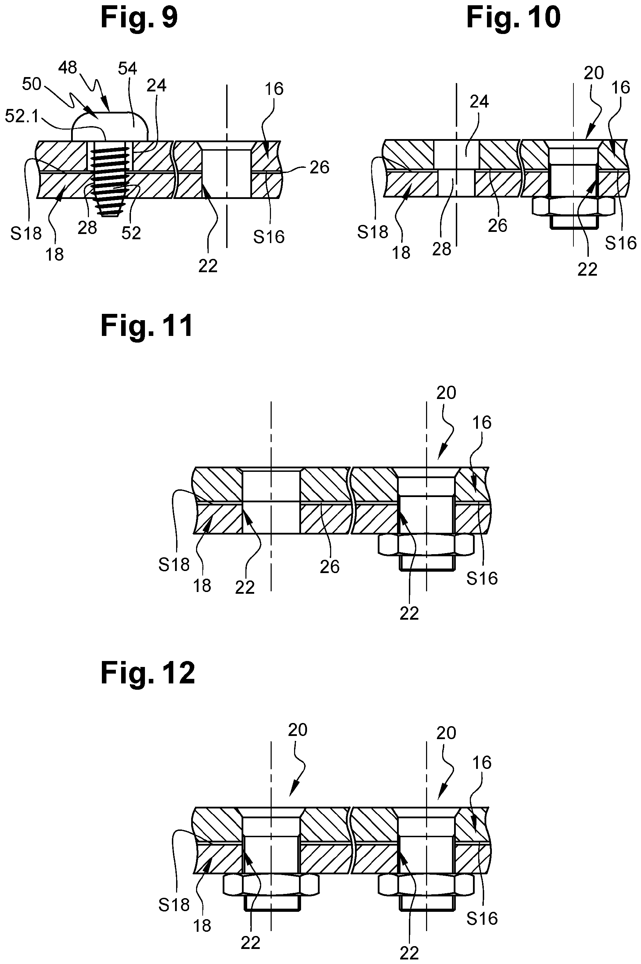

Selon un mode de réalisation visible sur la figure 2, le fuselage 12 comprend plusieurs tronçons 16, 18 réalisés indépendamment les uns des autres, positionnés bout à bout et assemblés les uns aux autres grâce à une pluralité d'éléments de liaison finaux 20 (visibles sur la figure 12), comme des rivets ou des boulons par exemple, logés dans des trous finaux 22 présentant un diamètre donné.

Selon une configuration, un premier tronçon 16 présente un premier bord circulaire 16.1 emmanché dans un deuxième bord circulaire 18.1 d'un deuxième tronçon 18. Le premier bord circulaire 16.1 est relié au deuxième bord circulaire 18.1 par au moins une série d'éléments de liaison finaux 20 positionnés dans au moins un plan transversal. L'invention n'est pas limitée à l'assemblage de deux tronçons du fuselage. Elle peut s'appliquer à d'autres tronçons de l'aéronef, comme par exemple les tronçons d'une voilure d'aéronef. Les premier et deuxième tronçons 16, 18 ne sont pas plus décrits car ils peuvent être identiques à ceux de l'art antérieur. De même, l'invention n'est pas limitée à l'assemblage de deux tronçons 16, 18. Elle peut être utilisée plus largement pour assembler au moins deux pièces 16, 18 grâce à plusieurs éléments de liaison finaux 20. Lorsque les première et deuxième pièces 16 et 18 sont à l'état assemblé, la première pièce 16 comprend une première face de contact S16 en regard de la deuxième pièce 18 et cette dernière comprend une deuxième face de contact S18 en regard de la première pièce 16.

Le procédé d'assemblage comprend une étape de réalisation de premiers avant-trous 24 dans la première pièce 16. Chaque premier avant-trou 24 a un diamètre inférieur ou égal à celui d'un trou final 22. Chaque premier avant-trou 24 est positionné à l'emplacement d'un trou final 22.

Selon un mode opératoire, les premiers avant-trous 24 sont réalisés par perçage. Bien entendu, l'invention n'est pas limitée à ce mode de réalisation. Ainsi, les premiers avant-trous 24 pourraient être réalisés lors de la réalisation de la première pièce 16.

Le procédé d'assemblage comprend une étape de dépose d'un mastic d'étanchéité 26 sur au moins l'une des première et deuxième faces de contact S16, S18. Selon un mode de réalisation, les première et deuxième faces de contact S16, S18 sont enduites de mastic d'étanchéité 26. Le mastic d'étanchéité 26 et le mode opératoire de dépose du mastic d'étanchéité 26 ne sont pas plus décrits car ils peuvent être identiques à ceux de l'art antérieur.

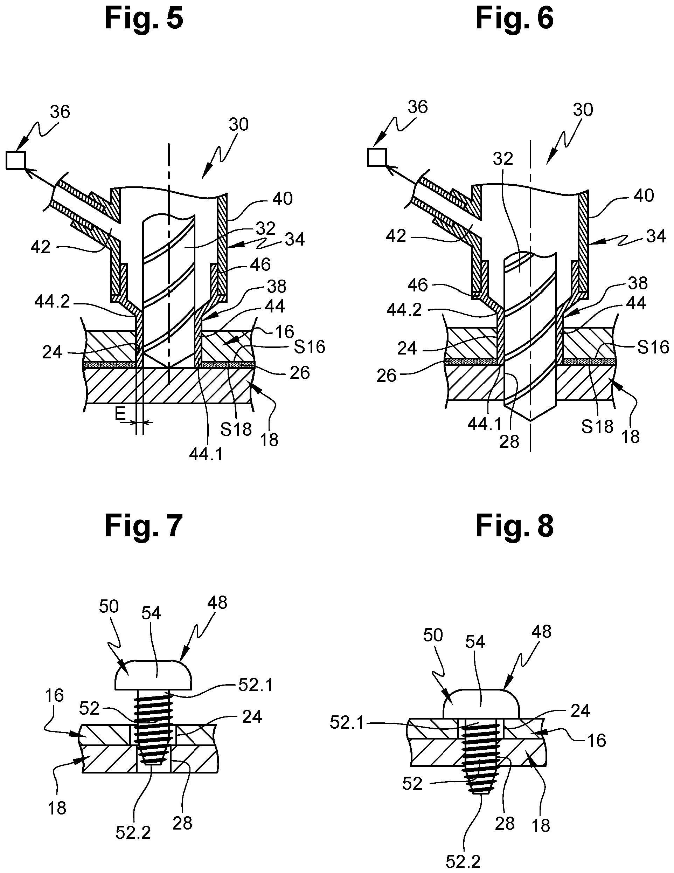

Le procédé d'assemblage comprend une étape d'accostage des première et deuxième pièces 16, 18 de sorte que le mastic d'étanchéité 26 soit intercalé entre les première et deuxième faces de contact S16, S18, comme illustré sur la figure 5. A l'issue de cette étape, les première et deuxième pièces 16 et 18 sont positionnées approximativement comme à l'état assemblé.

Le procédé d'assemblage comprend une étape de réalisation de deuxièmes avant-trous 28 dans la deuxième pièce 18 coaxiaux aux premiers avant-trous 24 présents dans la première pièce 16. Les deuxièmes avant-trous 28 ont un diamètre inférieur à celui des premiers avant-trous 24.

Selon un mode de réalisation visible sur les figures 5 et 6, chaque deuxième avant-trou 28 est réalisé par perçage en utilisant un outil de perçage 30 comportant un foret 32 ainsi qu'un embout 34 dans lequel est positionné le foret 32, ledit embout 34 étant relié à un système d'aspiration 36 et équipé d'un canon de perçage 38.

L'embout 32 comprend un corps cylindrique 40 présentant un piquage 42 relié au système d'aspiration 36. Le foret 32 présente un diamètre égal au diamètre des deuxièmes avant-trous 28.

Le canon de perçage 38 comprend une première partie 44 tubulaire qui s'étend entre des première et deuxième extrémités 44.1, 44.2 et qui présente un diamètre intérieur approximativement égal à celui du foret 32 et un diamètre extérieur inférieure ou égal au diamètre des premiers avant-trous 24. Le canon de perçage 38 comprend également une deuxième partie 46 configurée pour relier la deuxième extrémité 44.2 de la première partie 44 et l'embout 34.

Selon un mode de réalisation, la première partie 44 a une épaisseur E de l'ordre de 0,6 mm.

En fonctionnement, lorsque le diamètre extérieur de la première partie 44 du canon de perçage 38 est inférieur ou égal au diamètre des premiers avant-trous 24, la première extrémité 44.1 de la première partie est en appui contre la face de contact S18 de la deuxième pièce 18. Lorsque le diamètre extérieur de la première partie 44 du canon de perçage 38 est égal au diamètre des premiers avant-trous 24, la première partie 44 du canon de perçage 38 est emmanchée dans l'un des premiers avant-trous 24 et le foret 32 est coaxial au premier avant-trou 24.

La présence du mastic d'étanchéité 26 entre les première et deuxième faces de contact S16 et S18 permet d'obtenir une étanchéité entre le canon de perçage 38 et la deuxième pièce 18 lors du perçage des deuxièmes avant-trous 28. Par conséquent, tous les déchets produits lors du perçage des deuxièmes avant-trous 28 sont aspirés par le système d'aspiration 36. Selon l'invention, il n'est plus nécessaire de désassembler les première et deuxième pièces 16 et 18 pour nettoyer l'interface entre les première et deuxième faces de contact S16, S18, ce qui permet de réduire la durée du procédé d'assemblage.

Le procédé d'assemblage comprend une étape de mise en place d'éléments de liaison temporaires 48 dans les premiers et deuxièmes avant-trous 24, 28.

Selon un mode de réalisation visible sur les figures 7 et 8, chaque élément de liaison temporaire 48 est une vis autoforeuse 50. Chacune d'elles comprend un corps cylindrique fileté 52 et une tête 54 reliée à une première extrémité 52.1 du corps cylindrique fileté 52. Selon une configuration, le corps cylindrique filetée 52 a un diamètre inférieur à celui des premiers avant-trous 24, le diamètre du corps cylindrique filetée 52 étant configuré pour obtenir un vissage de la vis autoforeuse 50 dans le deuxième avant-trou 28.

Au début de l'étape de mise en place, chaque vis autoforeuse 50 est approximativement centrée dans un avant-trou 24, la deuxième extrémité 52.2 du corps cylindrique 52 étant positionnée dans le deuxième avant-trou 28. En suivant, la vis autoforeuse 50 est vissée jusqu'à ce que la tête 54 soit en appui contre la première pièce 16, comme illustré sur la figure 8.

Les vis autoforeuses 50 ont chacune un coût inférieur à celui des éléments de liaison temporaires 48 de l'art antérieur et peuvent être mises en place sans un outil spécifique.

Le nombre d'éléments de liaison temporaires 48 et leur agencement sont déterminés de sorte qu'après la mise en place de tous les éléments de liaison temporaires 48, les première et deuxième pièces 16, 18 soient suffisamment maintenues pour permettre les étapes ultérieures de perçage des trous finaux 22 et de pose des éléments de liaison définitifs 20. Le procédé d'assemblage comprend alors une étape de réalisation des trous finaux 22 entre les éléments de liaison temporaires 48, comme illustré sur la figure 9, ainsi qu'une étape de mise en place des éléments de liaison définitifs 20 dans les trous finaux 22, comme illustré sur la figure 11.

Enfin, le procédé d'assemblage comprend les étapes de retrait des éléments de liaison temporaires 48, comme illustre sur la figure 11, de perçage des trous finaux 22 à la place des premiers et deuxièmes avant-trous 24, 28, comme illustré sur la figure 12, et de mise en place des éléments de liaison définitifs 20 dans les trous finaux 22, comme illustré sur la figure 13.

## Revendications

1. Procédé d'assemblage de première et deuxième pièces (16, 18) reliées dans un état assemblé par une pluralité d'éléments de liaison finaux (20), les première et deuxième pièces (16, 18) présentant des première et deuxième faces de contact (S16, S18) en regard l'une de l'autre dans l'état assemblé ainsi que des trous finaux (22) dans lesquels sont logés les éléments de liaison finaux (20), **caractérisé en ce que** le procédé d'assemblage comprend les étapes :
- de réalisation de premiers avant-trous (24) dans la première pièce (16),
- de dépose d'un mastic d'étanchéité (26) sur au moins l'une des première et deuxième faces de contact (S16, S18),
- d'accostage des première et deuxième pièces (16, 18),
- de réalisation de deuxièmes avant-trous (28) dans la deuxième pièce (18) en utilisant un outil de perçage (30) relié à un système d'aspiration (36) et équipé d'un canon de perçage (38) comportant une première partie (44) qui présente un diamètre extérieur inférieur ou égal à celui des premiers avant-trous (24) et une première extrémité (44.1) en appui contre la deuxième face de contact (S18) de la deuxième pièce (18) lors de la réalisation des deuxièmes avant-trous (28),
- de mise en place d'éléments de liaison temporaires (48) positionnés dans les premiers et deuxièmes avant-trous (24, 28),
- de réalisation de trous finaux (22) entre les éléments de liaison temporaires (48) et de mise en place des éléments de liaison définitifs (20) dans lesdits trous finaux (22),
- de retrait des éléments de liaison temporaires (48), de perçage des trous finaux (22) à la place des premiers et deuxièmes avant-trous (24, 28) et de mise en place des éléments de liaison définitifs (20) dans lesdits trous finaux (22).

2. Procédé d'assemblage selon la revendication 1, **caractérisé en ce que** le diamètre extérieur de la première partie (44) du canon de perçage (38) est égal à celui des premiers avant-trous (24) pour que la première partie (44) du canon de perçage (38) soit emmanchée dans l'un des premiers avant-trous (24).

3. Procédé d'assemblage selon l'une des revendications précédentes, **caractérisé en ce que** la première partie (44) du canon de perçage (38) a une épaisseur de l'ordre de 0,6 mm.

4. Procédé d'assemblage selon l'une des revendications précédentes, **caractérisé en ce que** chaque élément de liaison temporaire (48) est une vis autoforeuse (50) comportant un corps cylindrique fileté (52) ainsi qu'une tête (54), ledit corps cylindrique fileté (52) présentant un diamètre inférieur à celui des premiers avant-trous (24) et étant configuré pour obtenir un vissage de la vis autoforeuse (50) dans l'un des deuxièmes avant-trous (28).

5. Procédé d'assemblage de deux tronçons d'un aéronef mettant en œuvre le procédé d'assemblage selon l'une des revendications précédentes.

## Patentansprüche

1. Verfahren zum Zusammenbau eines ersten und zweiten Teils (16, 18), die in einem zusammengebauten Zustand durch eine Vielzahl von Endverbindungselementen (20) verbunden sind, wobei das erste und das zweite Teil (16, 18) eine erste und zweite Kontaktfläche aufweisen (S16, S18) die sich im zusammengebauten Zustand gegenüberliegen, sowie Endbohrungen (22) aufweisen, in denen die Endverbindungselemente (20) untergebracht sind, **dadurch gekennzeichnet, dass** das Montageverfahren die Schritte umfasst:
- Herstellen von ersten Vorlöchern (24) im ersten Teil (16),
- Auftragen eines Dichtungskitts (26) auf mindestens eine der ersten und zweiten Kontaktfläche (S16, S18),
- Anlegen des ersten und zweiten Teils (16, 18),
- Herstellen von zweiten Vorlöchern (28) im zweiten Teil (18) mit einem Bohrwerkzeug (30), das mit einem Saugsystem (36) verbunden ist und mit einem Bohrrohr (38) ausgestattet ist, das einen ersten Abschnitt (44) umfasst, dessen Außendurchmesser kleiner oder gleich dem der ersten Vorlöcher (24) ist, und ein erstes Ende (44.1) aufweist, das an der zweiten Kontaktfläche (S18) des zweiten Teils (18) während der Herstellung der zweiten Vorlöcher (28) anliegt,
- Einbringen von temporären Verbindungselementen (48), die in den ersten und zweiten Vorlöchern (24, 28) angeordnet sind,
- Herstellen von Endlöchern (22) zwischen den temporären Verbindungselementen (48) und Einbringen der Endverbindungselemente (20) in die Endlöcher (22),
- Entfernen der temporären Verbindungselemente (48), Bohren der Endlöcher (22) anstelle der ersten und zweiten Vorlöcher (24, 28) und Einbringen der Endverbindungselemente (20) in die Endlöcher (22).

2. Verfahren zum Zusammenbau nach Anspruch 1, **dadurch gekennzeichnet, dass** der Außendurchmesser des ersten Abschnitts (44) des Bohrrohres (38) gleich dem der ersten Vorlöcher (24) ist, so dass der erste Abschnitt (44) des Bohrrohres (38) in eines der ersten Vorlöcher (24) eingepasst ist.

3. Verfahren zum Zusammenbau nach einem der vorhergehenden Ansprüche, **dadurch gekennzeichnet, dass** der erste Abschnitt (44) des Bohrrohres (38) eine Dicke in der Größenordnung von 0,6 mm hat.

4. Verfahren zum Zusammenbau nach einem der vorhergehenden Ansprüche, **dadurch gekennzeichnet, dass** jedes temporäre Verbindungselement (48) eine selbstbohrende Schraube (50) ist, die einen zylindrischen Gewindekörper (52) und einen Kopf (54) umfasst, wobei der zylindrische Gewindekörper (52) einen kleineren Durchmesser aufweist als die ersten Vorlöcher (24) und dazu eingerichtet ist, ein Einschrauben der selbstbohrenden Schraube (50) in eines der zweiten Vorlöcher (28) zu erreichen.

5. Verfahren zum Zusammenbau zweier Teilstücke eines Flugzeugs, das das Verfahren zum Zusammenbau nach einem der vorhergehenden Ansprüche verwendet.

## Claims

1. Method for assembling first and second components (16, 18) connected in an assembled state by a plurality of final linking elements (20), the first and second components (16, 18) having first and second contact faces (S16, S18) facing one another in the assembled state and also final holes (22) in which the final linking elements (20) are accommodated, **characterized in that** the assembly method comprises the steps of:
a.- producing first starter holes (24) in the first component (16),
b.- depositing a sealing mastic (26) on at least one of the first and second contact faces (S16, S18),
c.- placing the first and second components (16, 18) against one another,
d.- producing second starter holes (28) in the second component (18) using a drilling tool (30) connected to a suction system (36) and equipped with a drill bush (38) comprising a first part (44) that has an outside diameter less than or equal to that of the first starter holes (24) and a first end (44.1) bearing against the second contact face (S18) of the second component (18) upon production of the second starter holes (28),
e.- setting in place temporary linking elements (48) positioned in the first and second starter holes (24, 28),
f.- producing final holes (22) between the temporary linking elements (48) and setting in place the definitive linking elements (20) in said final holes (22),
g.- removing the temporary linking elements (48), drilling the final holes (22) in the location of the first and second starter holes (24, 28) and setting in place the definitive linking elements (20) in said final holes (22).

2. Assembly method according to Claim 1, **characterized in that** the outside diameter of the first part (44) of the drill bush (38) is equal to that of the first starter holes (24) such that the first part (44) of the drill bush (38) is inserted into one of the first starter holes (24).

3. Assembly method according to one of the preceding claims, **characterized in that** the first part (44) of the drill bush (38) has a thickness of the order of 0.6 mm.

4. Assembly method according to one of the preceding claims, **characterized in that** each temporary linking element (48) is a self-tapping screw (50) comprising a threaded cylindrical body (52) and also a head (54), said threaded cylindrical body (52) having a diameter less than that of the first starter holes (24) and being configured such as to obtain screwing of the self-tapping screw (50) in one of the second starter holes (28).

5. Method for assembling two portions of an aircraft by implementing the assembly method according to one of the preceding claims.
